# EUROPEAN PATENT SPECIFICATION

(11) **EP 3 670 005 B1**
(45) Date of publication and mention of the grant of the patent: **04.08.2021**
(21) Application number: 18465645.2
(22) Date of filing: 21.12.2018
(51) Int. Cl.: B06B 1/06, B60G 11/27, B60G 17/019

(54) **ULTRASONIC TRANSDUCER DEVICE AND AIR SUSPENSION DEVICE COMPRISING AN ULTRASONIC TRANSDUCER DEVICE**
ULTRASCHALLWANDLERVORRICHTUNG UND LUFTFEDERVORRICHTUNG MIT EINER ULTRASCHALLWANDLERVORRICHTUNG
DISPOSITIF TRANSDUCTEUR À ULTRASONS ET DISPOSITIF DE SUSPENSION PNEUMATIQUE COMPRENANT UN DISPOSITIF TRANSDUCTEUR À ULTRASONS

(43) Date of publication of application: 24.06.2020
(73) Proprietor: Continental Automotive GmbH, 30165 Hannover (DE)
(72) Inventor: Dulf, Andrei, 307285 Mosnita Noua (RO)
(74) Representative: Continental Corporation

(56) References cited:
- JP-A- H10 206 528
- KR-A- 20180 061 105
- PL-B1- 225 675
- US-A- 5 936 161

## Description

The invention is concerned with an ultrasonic transducer device and an air suspension device comprising an ultrasonic transducer device.

Ultrasonic ranging is one of the common techniques to determine the distance to an object. Ultrasonic ranging is based on the time of flight method wherein the distance is calculated based on the time of flight between a transmission and a reception of a sound wave and the speed of sound of the sound wave. To determine the time of flight, an ultrasonic transducer device sends the sound wave in a predefined direction to the object. The sound wave is reflected by the object. The reflected sound wave is detected by the ultrasonic transducer device. Ultrasonic transducer devices comprise piezoelectric elements for sending and receiving the ultrasonic waves.

The sonic damping behavior and the speed of sound of a medium depends on its temperature. For this reason it is necessary to measure the temperature of the medium analyzed by ultrasonic ranging. The medium is usually attached to the piezoelectric element of the ultrasonic transducer device. A temperature sensor placed inside the ultrasonic transducer device is physically separated from the medium. As a consequence the temperature sensors measure the temperature of the ultrasonic transducer device which may be different from the temperature of the medium. To address this issue the temperature sensor is attached in or to the medium in some embodiments. This solution allows precise measurements of the temperature of the medium but requires additional space or a housing, because the temperature sensor is outside the ultrasonic transducer device.

Document PL 225 675 B1 discloses an ultrasonic electromechanical transducer. The transducer comprises a piezoceramic disc stack and a measuring element in the form of a thermoregulator or thermocouple.

Document US 5 936 161 A discloses an arrangement for making contactless distance measurements within an air spring of a motor vehicle. The air spring comprises an ultrasonic component and a temperature sensor.

Document JP H10 206528 A discloses an ultrasonic sensor comprising a piezoelectric vibrator and a control board. The control board includes a thermistor for detecting a temperature change of the sensor.

Document KR 2018 0061105 A discloses an ultrasonic transducer comprising a case. A piezoelectric element is fixed in the case to generate ultrasonic waves. A temperature sensor is fixed in the case to measure an ambient temperature.

It is an object of the present invention to provide a solution for measuring the temperature of a medium without the need for an additional device.

The object is accomplished by the subject matter of the independent claim. Advantageous aspects of the invention are defined in the dependent claims.

The invention provides an ultrasonic transducer device comprising a piezoelectric element and a temperature sensor element, wherein the temperature sensor element is arranged in a through hole of the piezoelectric element. In other words, the ultrasonic transducer device comprises the temperature sensor element to measure a temperature of a medium which is attached to the piezoelectric element. To provide a measurement of the medium, the temperature sensor is arranged in a through hole of the piezoelectric element.

The invention has the advantage, that the temperature sensor element may be placed close to a medium without the need for additional space.

As an example, the piezoelectric element may be made of lead zirconate titanate or other piezoelectric ceramic materials. During an excitation of the piezoelectric element by an applied voltage, the piezoelectric element may oscillate. The ultrasonic transducer device may be designed to measure a distance to a surface through a medium. The medium may be a gas, a solid or a liquid. The piezoelectric element may be configured to send an ultrasonic signal into the medium and to measure the reflected signal of the medium. The distance may be calculated by a control unit of the ultrasonic transducer device using the time of flight principle. As the temperature of the medium influences the absorption behavior of the medium and the speed of sound inside the medium, it is necessary to measure the temperature of the medium. The medium may be attached to the piezoelectric element to provide a physical connection between both elements. The piezoelectric element provides a through hole. The through hole may comprise two openings. One opening of the through hole may be oriented towards a contact surface, connecting the piezoelectric element and the medium. The other opening may be oriented towards a carrier element. The temperature sensor is arranged inside the through hole. By arranging the temperature sensor element inside the through hole it is possible to place the temperature sensor element close to the medium. The lower distance to the medium allows a reliable measurement of the temperature of the medium.

The invention also comprises embodiments that provide additional technical advantages.

According to a further embodiment of the invention the piezoelectric element is shaped as a circular hollow cylinder, wherein the through hole is oriented perpendicular to a bottom base surface of the circular hollow cylinder and a top base surface of the circular cylinder. In other words the piezoelectric element is shaped as a circular hollow cylinder or a cylindrical shell or a ring, wherein the through hole is the inner circular volume of the hollow cylinder. The embodiment has the advantage that the piezoelectric element provides space to arrange the temperature sensor element.

The ultrasonic transducer device comprises a damping element and a carrier element, wherein the piezoelectric element is mechanically coupled to the carrier element by means of the damping element. In other words, the ultrasonic transducer device comprises the damping element which is configured to attach the piezoelectric element to the carrier element. The embodiment has the advantage that oscillations of the piezoelectric element are damped before reaching the carrier element. As an example, the piezoelectric element may be attached on the damping element to minimize oscillations effecting the carrier element. During an excitation of the piezoelectric element by an applied voltage, the piezoelectric element may oscillate. To avoid an affection of the carrier element by the oscillations, the damping element may be made of a damping material that absorbs mechanical energy. The damping element may be made of polymers or silicones.

In the damping element connection elements are integrated, the connection elements electrically connecting the temperature sensor element to connectors of the carrier element. In other words the temperature sensor element is connected to connectors of the carrier element by the connection element which is situated inside the damping element. The invention has the advantage that a connection between the carrier element and the temperature sensor element can be provided by the connection element situated inside the damping element. As an example, the connection element may be a wire that connects the temperature sensor element with connectors of the carrier element. The wire may be made of copper or iron and may have a diameter of some micrometers. The wire may be loose to prevent a rupture during oscillation.

The temperature sensor element is separated from the piezoelectric element by means of a material of the damping element. In other words, the temperature sensor element has no physical connection to the piezoelectric element. The space between the temperature sensor element and the piezoelectric element is filled with the damping element. The invention has the advantage that the temperature of the piezoelectric element does not influence the temperature measured by the temperature sensor element.

According to a further embodiment of the invention, the damping element is made of an elastomeric compound. In other words, the damping element comprises an elastic polymer. The embodiment has the advantage that the damping element comprises a material with a higher loss factor than other common materials. As an example, the damping element may comprise silicones, rubber or fluoroelastomers.

The carrier element is a printed circuit board. In other words, the damping element is placed on a printed circuit board. The embodiment has the advantage that the ultrasonic transducer device is placed close to electronics controlling the piezoelectric element. As an example, the ultrasonic transducer device may be placed on a printed circuit board comprising electronics to control the ultrasonic transducer device.

According to a further embodiment of the invention, the temperature sensor comprises a thermistor. In other words, the temperature sensor may comprise a thermally sensitive resistor. The embodiment has the advantage that the temperature sensor is made of a low priced and precise element. As an example, the temperature sensor may comprise a negative temperature coefficient thermistor or a positive temperature coefficient thermistor.

The invention provides an air suspension device comprising the ultrasonic transducer device. In other words, the ultrasonic transducer device may be placed inside a pneumatic spring to measure a distance between two elements of the pneumatic spring.

As an example not forming part of the invention, a method for controlling an ultrasonic transducer device is provided. The ultrasonic transducer device comprises a piezoelectric element, a control circuit and a temperature sensor element. The temperature sensor element is arranged in a through hole of the piezoelectric element. The method comprises the steps of measuring a temperature of a medium attached on the ultrasonic transducer device by the temperature sensor element arranged in the through hole of the piezoelectric element. The temperature of the medium is transmit to the control circuit. In a next step, a voltage is supplied to the piezoelectric element by the control circuit. The piezoelectric element oscillates according to the voltage and transmits a sound wave into the medium. The piezoelectric element receives an echo of the sound wave, causing a vibration of the piezoelectric element. The vibration causes an electrical polarization of the piezoelectric element. A voltage at a surface of the piezoelectric element is measured by the control circuit. The control circuit determines the time of flight between the transmission of the sound wave and the reception of the echo. The control circuit calculates the speed of sound in the medium as a function of the temperature of the medium. In a last step, the control circuit calculates the distance to the object, using the speed of sound and the time of flight.

In the following an exemplary implementation of the invention is described. The figures show:
- Fig. 1: a schematic illustration of an embodiment of the ultrasonic transducer device; and
- Fig. 2: a schematic illustration of a top base surface of a piezoelectric element.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures elements that provide the same function are marked with identical reference signs.

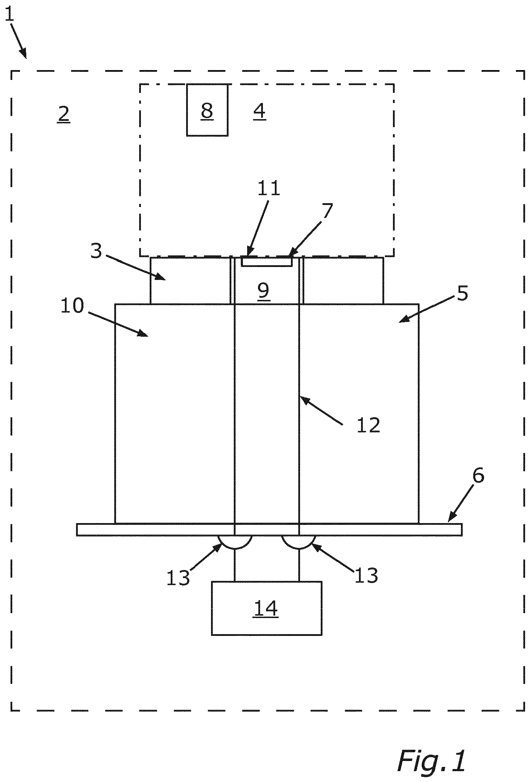

Fig. 1 shows an embodiment of the ultrasonic transducer device 1. The ultrasonic transducer device 1 may be arranged in an air suspension device 2 like an air spring. The ultrasonic transducer device 1 comprises the piezoelectric element 3 which may be attached to the acoustic medium 4. The piezoelectric element 3 is arranged on the damping element 5 to provide a mechanical connection to the carrier element 6. To determine the distance to an object at an end of the acoustic medium 4 it might be necessary to use the temperature sensor element 7 to measure the temperature of the medium 8. To provide a space to place the temperature sensor element 7 close to the acoustic medium 4 the piezoelectric element 3 comprises the through hole 9. The temperature sensor element 7 is placed inside the through hole 9.

The through hole 9 might be oriented perpendicular to the bottom base surface 10 and the top base surface 11 of the piezoelectric element 3. The piezoelectric element 3 and the through hole 9 each may have the shape of a cylinder. The piezoelectric element 3 and the through hole 9 may form a hollow cylinder. The damping element comprises a partial volume inside the through hole 9. To avoid an influence of the piezoelectric element 3 on the temperature 8 measured by the temperature sensor element 7, the temperature sensor element 7 is arranged inside the through hole 9 with a distance to the piezoelectric element 3. The temperature sensor element 7 is at least partially surrounded by the damping element 5. A surface of the temperature sensor element 7 may be physically connected to the acoustic medium 4. The temperature sensor element 7 is connected to connectors 13 of the carrier element 6 by a connection element 12. The connection element 12 may comprise wires to provide an electrical connection to the connectors.

The carrier element 6 is a printed circuit board. The connectors 13 may be electrically connected to a control circuit 14 which may comprise microcontroller or a microprocessor. The control circuit may be attached to the carrier element 6. The control circuit 14 may provide a measuring current to the connection element 12, flowing through the temperature sensor element 7. The temperature sensor element 7 may influence the measuring current by changing its resistance, depending on the temperature of the medium 8. To measure a distance to an object, the control circuit 14 may apply voltage to the piezoelectric element 3. The piezoelectric element 3 may oscillate according to the voltage and transmit sound wave into the acoustic medium 4. The sound wave may propagate through the acoustic medium 4. The speed of the sound wave may depend on the temperature of the medium 8. When the sound wave hits the object, parts of the sound wave may be reflected as an echo. The echo may propagate back to the piezoelectric element 3. When the piezoelectric element 3 receives the echo the piezoelectric element 3 may provide a voltage to the control circuit 14. The time between the transmission of the sound wave and the reception of the Echo may be determined by the control circuit 14. By multiplying the time and the speed of sound the distance to the object may be calculated by the control circuit 14.

As the temperature of the medium 8 has an influence on the speed of sound, the ultrasonic sensor device 1 may measure the temperature of the medium 8 by using the temperature sensor element 7. The temperature sensor element 7 may be placed at the top base surface 11 of the ultrasonic sensor device 1 inside the through hole 9. The temperature sensor element 7 may comprise a thermistor. To provide an electrical connection to the control circuit 14, the connection element 12 is placed inside the damping element 5. The connection element 12 may comprise loose wires connecting the temperature sensor element 7 and the connectors 13 of the carrier element 6. The control circuit 14 may calculate the speed of sound as a function of the temperature of the medium 8. In the last step the control circuit 14 may calculate the distance to the object.

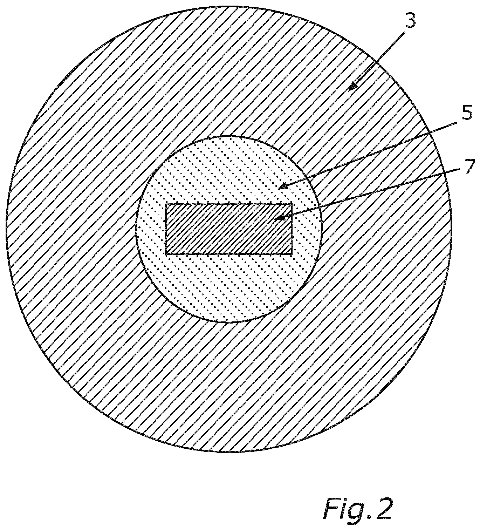

Fig. 2 shows a schematic illustration of a top base surface 11 of a piezoelectric element 3. The temperature sensor element 7 may be placed inside the through hole 9 which may be filled by the damping element 5.

For acoustic ranging applications it is necessary to measure the medium temperature 8. Mounting a temperature sensing device 7 on the printed circuit board 6 will measure the PCB 6 temperature, not the medium temperature 8. The invention allows for measuring the medium temperature 8 on the piezoceramic transducer surface. For ultrasonic ranging applications the acoustic medium temperature 8 is important. Measuring the medium temperature 8 can be achieved either by immersing a temperature sensing device 7 in the medium 4 (requires physical space next to the ultrasonic transducer element 3) or behind the ultrasonic transducer component 3 in which case the temperature sensing device 7 is measuring the printed circuit board 6 temperature and not the acoustic medium 4 directly.

The invention allows for mounting the temperature sensing device 7 at the surface of the ultrasonic transducer element 3 without requiring additional space. The proposed piezoceramic element 3 has the shape of a ring with the temperature sensing device 7 mounted in the hollow disc center 9. The electrical connections 12 between the temperature sensing device 7 and the printed circuit board 6 are passed through the elastomeric compound 5 below the piezoceramic disc 3. There is no physical connection between the piezoceramic disc 3 and the temperature sensing device 7, separation between the two being made by the elastomeric compound 5.

The invention allows for precise acoustic medium temperature 7 measurements without requiring additional space around the ultrasonic transducer element 3. Using a piezoceramic transducer in the shape of a ring allows for mounting the temperature sensing device in direct contact with the acoustic medium. The proposed location offers the best possible temperature measurement of the acoustic medium without requiring additional space around the piezoceramic element. The temperature sensing device does not have direct contact to the piezoceramic element being separated by the elastomeric compound, so the ultrasonic transducer oscillation is not impacted

The figures show sectional drawings of an ultrasonic transducer device 1.

Overall, the example shows how a device for measuring a temperature of a medium is provided by the invention as defined in the appended claims.

### List of Reference Signs

- 1: Ultrasonic transducer device
- 2: Air suspension device
- 3: Piezoelectric element
- 4: Acoustic medium
- 5: Damping element
- 6: Carrier element
- 7: Temperature sensor element
- 8: Temperature of the medium
- 9: Through hole
- 10: Bottom base surface
- 11: Top base surface
- 12: Connection element
- 13: Connectors
- 14: Control circuit

## Claims

1. Ultrasonic transducer device (1) comprising a piezoelectric element (3), and a temperature sensor element (7), wherein the temperature sensor element (7) is arranged in a through hole (9) of the piezoelectric element (3), wherein the ultrasonic transducer device (1) further comprises a damping element (5) and a carrier element (6), wherein the piezoelectric element (3) is mechanically coupled to the carrier element (6) by means of the damping element (5), and wherein the carrier element (6) is a printed circuit board, and wherein
in the damping element (5) connection elements (12) are integrated, the connection elements (12) electrically connecting the temperature sensor element (7) to connectors (13) of the carrier element (6), and wherein
the temperature sensor element (7) is separated from the piezoelectric element (3) by means of a material of the damping element (5), and wherein the space between the temperature sensor element (7) and the piezoelectric element (3) is filled with the damping element (5).

2. Ultrasonic transducer device (1) according to claim 1,
**characterized in that**
the piezoelectric element (3) is shaped as a circular hollow cylinder, wherein the through hole (9) is oriented perpendicular to a bottom base surface (10) of the circular cylinder and a top base surface (11) of the circular cylinder.

3. Ultrasonic transducer device (1) as claimed in any preceding claim,
**characterized in that**
the damping element (5) is made of an elastomeric compound.

4. Ultrasonic transducer device (1) as claimed in any preceding claim,
**characterized in that**
the temperature sensor element (7) comprises a thermistor.

5. Air suspension device (13) comprising the ultrasonic transducer device (1) as claimed in any preceding claim.

## Patentansprüche

1. Ultraschallwandlervorrichtung (1), die ein piezoelektrisches Element (3) und ein Temperatursensorelement (7) aufweist,
wobei das Temperatursensorelement (7) in einem Durchgangsloch (9) des piezoelektrischen Elements (3) angeordnet ist, wobei
die Ultraschallwandlervorrichtung (1) des Weiteren ein Dämpfungselement (5) und ein Trägerelement (6) aufweist, wobei das piezoelektrische Element (3) mechanisch mittels des Dämpfungselements (5) an das Trägerelement (6) gekoppelt ist, und wobei das Trägerelement (6) eine gedruckte Schaltplatine ist, und wobei
Verbindungselemente (12) in das Dämpfungselement (5) integriert sind, wobei die Verbindungselemente (12) das Temperatursensorelement (7) elektrisch mit Verbindern (13) des Trägerelements (6) verbinden, und wobei
das Temperatursensorelement (7) von dem piezoelektrischen Element (3) durch ein Material des Dämpfungselements (5) getrennt ist, und wobei der Raum zwischen dem Temperatursensorelement (7) und dem piezoelektrischen Element (3) mit dem Dämpfungselement (5) gefüllt ist.

2. Ultraschallwandlervorrichtung (1) nach Anspruch 1, **dadurch gekennzeichnet, dass**
das piezoelektrische Element (3) als kreisförmiger hohler Zylinder geformt ist, wobei das Durchgangsloch (9) senkrecht zu einer Bodenbasisfläche (10) des kreisförmigen Zylinders und einer obersten Basisfläche (11) des kreisförmigen Zylinders orientiert ist.

3. Ultraschallwandlervorrichtung (1) nach einem der vorhergehenden Ansprüche, **dadurch gekennzeichnet, dass**
das Dämpfungselement (5) aus einem elastomeren Compound gefertigt ist.

4. Ultraschallwandlervorrichtung (1) nach einem der vorhergehenden Ansprüche, **dadurch gekennzeichnet, dass**
das Temperatursensorelement (7) einen Thermistor aufweist.

5. Luftfedervorrichtung (13), welche die Ultraschallwandlervorrichtung (1) gemäß einem der vorhergehenden Ansprüche aufweist.

## Revendications

1. Dispositif transducteur ultrasonore (1) comprenant un élément piézoélectrique (3) et un élément capteur de température (7),
l'élément capteur de température (7) étant disposé dans un trou débouchant (9) de l'élément piézoélectrique (3), le dispositif transducteur ultrasonore (1) comprenant en outre un élément d'amortissement (5) et un élément de support (6), l'élément piézoélectrique (3) étant couplé mécaniquement à l'élément de support (6) au moyen de l'élément d'amortissement (5), et l'élément de support (6) étant une carte de circuit imprimé, et
des éléments de connexion (12) étant intégrés dans l'élément d'amortissement (5), les éléments de connexion (12) connectant électriquement l'élément capteur de température (7) à des connecteurs (13) de l'élément de support (6), et
l'élément capteur de température (7) étant séparé de l'élément piézoélectrique (3) au moyen d'un matériau de l'élément d'amortissement (5), et l'espace entre l'élément capteur de température (7) et l'élément piézoélectrique (3) étant rempli avec l'élément d'amortissement (5).

2. Dispositif transducteur ultrasonore (1) selon la revendication 1,
**caractérisé en ce que**
l'élément piézoélectrique (3) est façonné comme un cylindre circulaire creux, le trou débouchant (9) étant orienté perpendiculairement à une surface de base inférieure (10) du cylindre circulaire et une surface de base supérieure (11) du cylindre circulaire.

3. Dispositif transducteur ultrasonore (1) selon une quelconque revendication précédente,
**caractérisé en ce que**
l'élément d'amortissement (5) est constitué d'un composé élastomère.

4. Dispositif transducteur ultrasonore (1) selon une quelconque revendication précédente,
**caractérisé en ce que**
l'élément capteur de température (7) comprend une thermistance.

5. Dispositif de suspension pneumatique (13) comprenant le dispositif transducteur ultrasonore (1) selon une quelconque revendication précédente.
